# EUROPÄISCHE PATENTANMELDUNG

(11) **EP 2 449 876 A1**
(43) Veröffentlichungstag der Anmeldung: **09.05.2012**
(21) Anmeldenummer: 11008128.8
(22) Anmeldetag: 07.10.2011
(51) Int. Cl.: A01G 17/14

(54) **Weinbergstickel**

(30) Priorität: 05.11.2010 DE 202010015158 U
(71) Anmelder: Gebhardt-Stahl GmbH, 59457 Werl (DE); Dick Profile GmbH, 56290 Dommershausen (DE)
(72) Erfinder: Neuhaus, Ralf, 59457 Werl (DE); Emberger, Robert, Dipl.-Ing., 59755 Arnsberg (DE)
(74) Vertreter: Dabringhaus, Walter

(57) **Zusammenfassung**

Mit einem Pfosten aus profilgewalztem Bandmaterial zur Halterung von Spanndrähten für den Einsatz insbesondere im Wein- und Obstanbau, der querschnittlich etwa U-förmig ausgebildet ist, mit Drahthalterungen im jeweiligen U-Schenkel soll eine Lösung geschaffen werden, mit der mit einfachen Stanzwerkzeugen Drahthalterungen in einen derartigen Pfosten eingebracht werden können, die gleichzeitig auch gegen ungewolltes Ausklinken gesichert sind.

Dies wird dadurch erreicht, dass die Drahthalterungen aus den U-Schenkeln (2b,2c) als nach außen geprägte Haltelaschen (3) ausgebildet sind mit einer Rückkröpfung (4) in Richtung auf den jeweiligen U-Schenkel (2b,2c) an ihrem freien Ende, wobei auf Abstand zum Übergangsbereich der Haltelasche zum U-Steg ein weiterer auf die Haltelasche zu gebogener Fixieransatz (6) vorgesehen ist.

## Beschreibung

Die Erfindung richtet sich auf einen Pfosten aus profilgewalztem Bandmaterial zur Halterung von Spanndrähten für den Einsatz insbesondere im Wein- und Obstanbau, der querschnittlich etwa U-förmig ausgebildet ist, mit Drahthalterungen im jeweiligen U-Schenkel, wie in dem DE 7 914 590 beschrieben.

Ein gattungsgemäßer Weinbergstickel ist beispielsweise auch aus der DE 101 05 830 A1 bekannt. Hier weist der aus profilgefalztem, stanzbaren Bandmaterial hergestellte Pfosten in beiden U-Schenkeln nach außen weisende zusätzliche Wülste auf, die in bestimmten Abständen durch eine Stanzung in Aufsicht eine etwa H-förmige Ausnehmung aufweisen, in die Spanndrähte eingeklinkt werden können.

Eine ähnliche Lösung zeigt die DE 25 60 089 C2, die DE 10 2004 038 750 A1, das DE 299 12 475 U1, FR 2 278 247 oder die DE 600 02 543 T2. Eine Verstellmöglichkeit über Drahtbügel, die ihrerseits an einem Weinbergstickel in verschiedene Positionen fixierbar sind, zeigt die DE 31 30 949 C2.

Aufgabe der Erfindung ist die Schaffung einer Lösung, mit der mit einfachen Stanzwerkzeugen Drahthalterungen in einen derartigen Pfosten eingebracht werden können, die gleichzeitig auch gegen ungewolltes Ausklinken gesichert sind.

Mit einem Pfosten der eingangs bezeichneten Art wird diese Aufgabe gemäß der Erfindung dadurch gelöst, dass die Drahthalterungen aus den U-Schenkeln als nach außen geprägte Haltelaschen ausgebildet sind mit einer Rückkröpfung in Richtung auf den jeweiligen U-Schenkel an ihrem freien Ende, wobei auf Abstand zum Übergangsbereich der Haltelasche zum U-Steg ein weiterer auf die Haltelasche zu gebogener Fixieransatz vorgesehen ist.

Diese Drahthalterungen lassen sich im Durchlauffertigungsprozess sehr einfach herstellen, wobei durch die Rückkröpfung bereits eine erste Drahtsicherung gegen ungewolltes Ausfädeln gegeben ist.

Um eine besonders gute Fixierung des Spanndrahtes zu gewährleisten, ist nach der Erfindung auch vorgesehen, dass auf Abstand zum Übergangsbereich der Drahthalterung zum U-Steg ein weiterer auf die Haltelasche zu gebogener Fixieransatz vorgesehen ist.

Der Spanndraht muss daher beim Einhängen einen gewissen Kurvenbereich zurücklegen und ist dann zweifach gegen Ausheben gesichert, einmal durch die Rückkröpfung am freien Ende der Haltelasche und zum anderen an den zusätzlich in Richtung der Haltelasche zu gebogenen Fixieransatz.

Werden mehrere Drahtzüge gewünscht, ist es nach der Erfindung möglich, den U-Steg mit eingestanzten Durchgangslöchern zur Führung eines zusätzlichen Drahtes auszurüsten.

Die Erfindung sieht auch vor, dass im Kopfbereich des U-Steges ein zusätzliches Loch zur Fixierung eines Ausziehwerkzeuges für den Pfosten vorgesehen ist, was für sich gesehen bekannt ist.

Weitere Einzelheiten, Merkmale und Vorteile der Erfindung ergeben sich aufgrund der nachfolgenden Beschreibung sowie anhand der Zeichnung. Diese zeigt in:

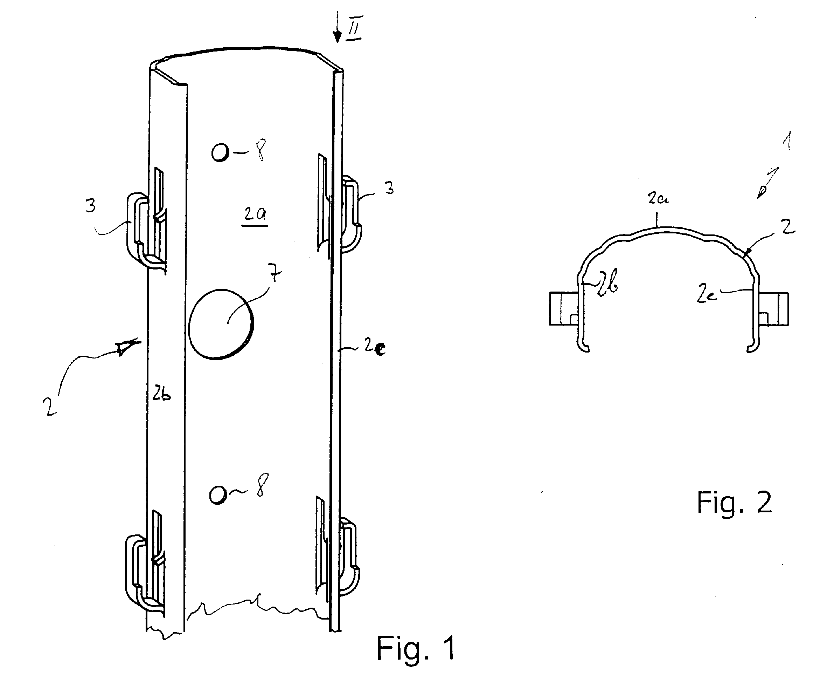

- Fig. 1: einen Teil eines erfindungsgemäßen Pfostens in räumlicher Darstellung,
- Fig. 2: eine Aufsicht auf den Pfosten gemäß Pfeil II in Fig. 1,

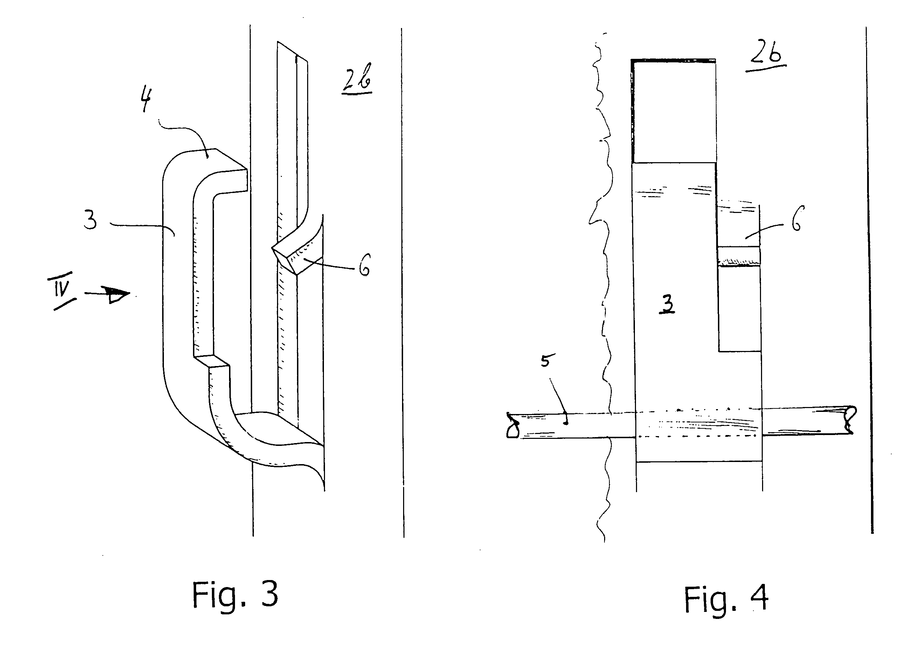

- Fig. 3: eine vergrößerte Darstellung einer Haltelasche mit einem Teil eines Pfostens sowie in
- Fig. 4: eine Aufsicht auf die Haltelasche gemäß Pfeil IV in Fig. 3.

Der allgemein mit 1 bezeichnete Pfosten bzw. Weinbergstickel ist aus einem kaltgewalzten Profilblech 2 querschnittlich U-förmig profiliert, wobei der U-Schenkel mit 2a bezeichnet ist, während die beiden außenrandseitigen U-Schenkel mit 2b und 2c bezeichnet sind.

In den beiden U-Schenkeln 2a, 2b sind durch entsprechende Stanzungen nach außen zwei Haltelaschen 3 ausgeprägt, die an ihrem oberen freien Ende eine Rückkröpfung 4 aufweisen, die zur Oberfläche des U-Schenkels 2b bzw. 2c einen gewissen Abstand einhält, um einen Spanndraht hindurchführen zu können.

In der Gebrauchslage legt sich ein in den Figuren nur angedeuteter Spanndraht 5 zwischen die jeweilige Haltelasche 3 und die Oberfläche des U-Schenkels 2b bzw. 2c.

Um den Spanndraht 5 nicht nur durch die Rückkröpfung 4 an einem Aushebeln zu hindern, ist zusätzlich aus der Fläche des jeweiligen U-Schenkels 2a bzw. 2b ein Fixieransatz 6 nach außen ausgeprägt.

Zum Ausziehen des Pfostens 1 aus dem Erdreich ist dieser an seinem oberen Ende mit einem Auszugsloch 7 ausgerüstet, welches in den U-Schenkel 2a eingebracht ist. Etwa mittig sind auf dem U-Schenkel in Abständen Durchgangslöcher 8 vorgesehen, um ggf. einen weiteren Draht einfädeln zu können, der auch als zusätzlicher Halt für die Pfosten 1 dienen kann.

Natürlich ist das beschriebene Ausführungsbeispiel der Erfindung noch in vielfacher Hinsicht abzuändern, ohne den Grundgedanken zu verlassen. So können beispielsweise zwei beidseitig der Haltelasche angeordnete Fixieransätze in einem der jeweiligen U-Schenkel vorgesehen sein, um eine noch optimalere Drahtfixierung zu erreichen, wobei aber gleichzeitig auch noch gewährleistet ist, dass der Draht sich auch wiederum vom Pfosten lösen lässt.

### Bezugszeichenliste:

- 1: Pfosten (Weinbergstickel)
- 2: Blech
- 2a: U-Schenkel
- 2b: U-Schenkel
- 3: Haltelaschen
- 4: Rückkröpfung
- 5: Spanndraht
- 6: Fixieransatz
- 7: Loch
- 8: Durchgangslöcher

## Patentansprüche

1. Pfosten aus profilgewalztem Bandmaterial zur Halterung von Spanndrähten für den Einsatz insbesondere im Wein- und Obstanbau, der querschnittlich etwa U-förmig ausgebildet ist, mit Drahthalterungen im jeweiligen U-Schenkel,
**dadurch gekennzeichnet,**
**dass** die Drahthalterungen aus den U-Schenkeln (2b,2c) als nach außen geprägte Haltelaschen (3) ausgebildet sind mit einer Rückkröpfung (4) in Richtung auf den jeweiligen U-Schenkel (2b,2c) an ihrem freien Ende, wobei auf Abstand zum Übergangsbereich der Haltelasche zum U-Steg ein weiterer auf die Haltelasche zu gebogener Fixieransatz (6) vorgesehen ist.

2. Vorrichtung nach Anspruch 1,
**dadurch gekennzeichnet,**
**dass** der U-Steg (2a) mit eingestanzten Durchgangslöchern (8) zur Führung eines zusätzlichen Drahtes ausgerüstet ist.

3. Vorrichtung nach Anspruch 1 oder 2,
**dadurch gekennzeichnet,**
**dass** im Kopfbereich des U-Steges (2a) ein zusätzliches Loch (7) zur Fixierung eines Ausziehwerkzeuges für den Pfosten (1) vorgesehen ist.
